# FASCICULE DE BREVET EUROPEEN

(11) **EP 1 648 716 B1**
(45) Date de publication et mention de la délivrance du brevet: **14.11.2007**
(21) Numéro de dépôt: 04741111.1
(22) Date de dépôt: 16.07.2004
(51) Int. Cl.: B60C 9/20

(54) **PNEUMATIQUE POUR VEHICULES LOURDS**
LUFTREIFEN FÜR SCHWERFAHRZEUGE
TYRE FOR HEAVY VEHICLES

(30) Priorité: 18.07.2003 FR 0308828
(43) Date de publication de la demande: 26.04.2006
(73) Titulaire: Société de Technologie Michelin, 63000 Clermont-Ferrand Cedex 09 (FR); Michelin Recherche et Technique S.A., 1763 Granges-Paccot (CH)
(72) Inventeur: FERLIN, Olivier, F-63200 Malauzat (FR)
(74) Mandataire: Le Cam, Stéphane Georges Elie
(86) Numéro de dépôt international: PCT/EP2004/007991
(87) Numéro de publication internationale: WO 2005/016665

(56) Documents cités:
- EP-A- 0 980 770
- WO-A-99/24270
- WO-A-99/58350
- FR-A- 2 744 955
- FR-A- 2 754 769

## Description

La présente invention concerne un pneumatique à armature de carcasse radiale, destiné à équiper des véhicules lourds tels que camions, bus, tracteurs, remorques... etc, et concerne plus particulièrement l'armature de sommet d'un tel pneumatique.

L'invention concerne plus spécifiquement un pneumatique du type « Poids-Lourds » dont le rapport de la hauteur sur jante « H » sur sa largeur axiale maximale « S » est au plus égal à 0.80 et de préférence inférieur à 0.60.

Un tel pneumatique à armature de carcasse radiale ancrée dans chaque bourrelet à au moins une tringle comprend une armature de sommet constituée par au moins deux couches dites de travail, radialement superposées et formées d'éléments de renforcement parallèles entre eux dans chaque couche et croisés d'une couche à la suivante en faisant avec la direction circonférentielle du pneumatique des angles dont la valeur peut être comprise entre 10 et 45° en valeur absolue.

Des câbles sont dits inextensibles lorsque lesdits câbles présentent sous une force de traction égale à 10% de la force de rupture un allongement relatif au plus égal à 0,2%.

Des câbles sont dits élastiques lorsque lesdits câbles présentent sous une force de traction égale à la charge de rupture un allongement relatif au moins égal à 4%.

La direction circonférentielle du pneumatique, ou direction longitudinale, est la direction correspondant à la périphérie du pneumatique et définie par la direction de roulement du pneumatique.

La direction transversale ou axiale du pneumatique est parallèle à l'axe de rotation du pneumatique.

La direction radiale est une direction coupant l'axe de rotation du pneumatique et perpendiculaire à celui-ci.

L'axe de rotation du pneumatique est l'axe autour duquel il tourne en utilisation normale.

Un plan radial ou méridien est un plan qui contient l'axe de rotation du pneumatique.

Le plan médian circonférentiel, ou plan équatorial, est un plan perpendiculaire à l'axe de rotation du pneu et qui divise le pneumatique en deux moitiés.

Dans de nombreux cas, la demanderesse a trouvé que plusieurs critères de qualité du pneumatique considéré, en particulier pour utilisation sur véhicules lourds, peuvent être améliorés par la présence dans l'armature de sommet, radialement entre les dites nappes de sommet de travail, d'une nappe additionnelle formée d'éléments métalliques orientés sensiblement parallèlement à la direction circonférentielle.

On peut citer la demande FR 2 744 955 qui, en vue d'abaisser la température de fonctionnement d'un pneumatique 'Poids lourds' au moyen d'une solution économique et efficace, préconise d'utiliser une nappe additionnelle d'éléments de renforcement circonférentiels ayant une largeur axiale au moins égale à 1,05 fois la largeur de la nappe de travail la plus large, les éléments de renforcement de ladite nappe additionnelle ayant un diamètre plus grand que le diamètre des éléments des nappes de travail.

Dans le cadre ci-dessus, la nappe additionnelle peut être formée de câbles en acier continus dits semi-élastiques, c'est-à-dire des câbles présentant des allongements relatifs à la rupture supérieurs à 2%. Ces câbles permettent d'obtenir le niveau de rigidité apte à une répartition harmonieuse de la tension circonférentielle entre les nappes de sommet de travail et la nappe additionnelle. Lesdits câbles sont avantageusement dits "bi-module", c'est-à-dire présentant une courbe, représentant la contrainte de traction en fonction de l'allongement relatif, ayant des faibles pentes pour les faibles allongements et une pente sensiblement constante et forte pour les allongements supérieurs. Le module avant cuisson très faible, pour des allongements inférieurs à 2%, permet une augmentation du développement circonférentiel de la nappe additionnelle pendant la cuisson du pneumatique.

La nappe additionnelle peut encore être formée de câbles métalliques en acier orientés circonférentiellement et coupés de manière à former des tronçons de longueur très inférieure à la longueur circonférentielle de la nappe, les coupures entre tronçons étant axialement décalées les unes par rapport aux autres. Un tel mode de réalisation permet de conférer, de manière simple, à la nappe additionnelle la rigidité désirée, quelle qu'elle soit.

Le choix des câbles élastiques ou coupés pour le renforcement de la nappe additionnelle ne permet pas la meilleure résistance à la fatigue de ladite nappe, soit en conséquence d'une diminution de la force de rupture des câbles élastiques, soit en conséquence de l'existence de concentrations de contrainte dans le mélange de calandrage des câbles coupés. La structure ainsi décrite pénalise donc l'endurance de la nappe additionnelle elle-même.

La demande internationale WO 99/24 270 enseigne qu'une meilleure résistance à la séparation entre nappe de carcasse et l'armature de sommet, qu'une meilleure résistance à la séparation entre nappes de sommet et qu'une meilleure résistance à la fatigue des éléments de renforcement circonférentiels de la nappe additionnelle peuvent être obtenues grâce à l'emploi en tant qu'éléments de renforcement de la nappe additionnelle d'éléments métalliques continus circonférentiellement et ondulés dans le plan de la nappe, les ondulations des dits éléments étant parallèles entre elles, en phase et orientées circonférentiellement telles que le rapport a/λ de l'amplitude a sur la longueur d'onde λ décroisse en allant axialement du centre aux bords de ladite nappe pour être minimal aux dits bords.

D'autres documents, tels que le document EP 0 980 770, décrivent, pour des utilisations sur véhicules lourds, la présence dans l'armature de sommet, radialement à l'intérieur des nappes de sommet de travail, d'une nappe additionnelle formée d'éléments métalliques orientés sensiblement parallèlement à la direction circonférentielle.

Selon le document précité, les éléments de renforcement de la nappe additionnelle sont des éléments métalliques continus circonférentiellement et ondulés dans le plan de la nappe et la nappe additionnelle présente des extrémités axiales axialement extérieures aux extrémités axiales des nappes de sommet de travail. La position radialement à l'intérieur des nappes de sommet de travail de la nappe additionnelle conduit à une sollicitation plus importante des éléments de renforcement la constituant et une diminution de la sollicitation des éléments de renforcement des nappes de sommet de travail selon la direction longitudinale.

Les essais réalisés avec ce type de pneumatiques ont montré que si l'endurance des pneumatiques ainsi réalisés est satisfaisante, il apparaît des phénomènes d'usure prématurée au niveau des épaules des pneumatiques.

Le document FR-A-2 754 769 montre un pneumatique comprenant les caractéristiques du préambule de la revendication 1.

L'invention a pour but de remédier à cet inconvénient, et préconise une solution qui permette une meilleure résistance à l'usure tout en conservant de bons résultats concernant l'endurance des pneumatiques.

Ce but a été atteint selon l'invention par un pneumatique comprenant une armature de carcasse radiale surmontée radialement d'une armature de sommet composée d'au moins deux couches de sommet de travail formées d'éléments de renforcement métalliques, croisés d'une couche à la suivante en faisant avec la direction circonférentielle des angles compris entre 10 et 45°, et d'au moins une couche additionnelle, formée d'éléments de renforcement métalliques orientés circonférentiellement, au moins une couche additionnelle étant radialement intérieure aux couches de sommet de travail, ladite couche additionnelle présentant une largeur axiale plus grande que la largeur de la couche de sommet de travail la plus large axialement et les éléments de renforcement de ladite couche additionnelle étant des éléments de renforcement métalliques présentant un module sécant à 0,7 % d'allongement compris entre 10 et 120 GPa et un module tangent maximum inférieur à 150 GPa.

Selon une réalisation préférée, le module sécant des éléments de renforcement à 0,7 % d'allongement est inférieur à 100 Gpa et supérieur à 20 GPa, de préférence compris entre 30 et 90 GPa et de préférence encore inférieur à 80 GPa.

De préférence également, le module tangent maximum des éléments de renforcement est inférieur à 130 GPa et de préférence encore inférieur à 120 GPa.

Les modules exprimés ci-dessus sont mesurés sur une courbe contrainte de traction en fonction de l'allongement déterminée avec une précontrainte de 20 MPa ramenée à la section de métal de l'élément de renforcement, la contrainte de traction correspondant à une tension mesurée ramenée à la section de métal de l'élément de renforcement.

Les modules des mêmes éléments de renforcement peuvent être mesurés sur une courbe contrainte de traction en fonction de l'allongement déterminée avec une précontrainte de 10 MPa ramenée à la section globale de l'élément de renforcement, la contrainte de traction correspondant à une tension mesurée ramenée à la section globale de l'élément de renforcement. La section globale de l'élément de renforcement est la section d'un élément composite constitué de métal et de caoutchouc, ce dernier ayant notamment pénétré l'élément de renforcement pendant la phase de cuisson du pneumatique.

Selon cette formulation relative à la section globale de l'élément de renforcement, les éléments de renforcement d'au moins une couche d'éléments de renforcement circonférentiels sont des éléments de renforcement métalliques présentant un module sécant à 0,7 % d'allongement compris entre 5 et 60 GPa et un module tangent maximum inférieur à 75 GPa.

Selon une réalisation préférée, le module sécant des éléments de renforcement à 0,7 % d'allongement est inférieur à 50 GPa et supérieur à 10 GPa, de préférence compris entre 15 et 45 GPa et de préférence encore inférieure à 40 GPa.

De préférence également, le module tangent maximum des éléments de renforcement est inférieur à 65 GPa et de préférence encore inférieur à 60 GPa.

Selon un mode de réalisation préféré, les éléments de renforcements d'au moins une couche additionnelle sont des éléments de renforcement métalliques présentant une courbe contrainte de traction en fonction de l'allongement relatif ayant des faibles pentes pour les faibles allongements et une pente sensiblement constante et forte pour les allongements supérieurs. De tels éléments de renforcement d'au moins une couche additionnelle sont habituellement dénommés éléments "bi-module".

Selon une réalisation préférée de l'invention, la pente sensiblement constante et forte apparaît à partir d'un allongement relatif compris entre 0,1% et 0,5%.

Les différentes caractéristiques des éléments de renforcement énoncées ci-dessus sont mesurées sur des éléments de renforcement prélevés sur des pneumatiques.

Des éléments de renforcement plus particulièrement adaptés à la réalisation d'au moins une couche additionnelle selon l'invention sont par exemple des assemblages de formule 21x23, dont la construction est 3x(0.26+6x0.23) 4.4/6.6 SS ; ce câble à torons est constitué de 21 fils élémentaires de formule 3 x (1+6), avec 3 torons tordus ensembles chacun constitué de 7 fils, un fil formant une âme centrale de diamètre égal à 26/100 mm et 6 fils enroulés de diamètre égal à 23/100 mm. Un tel câble présente un module sécant à 0,7% égal à 45 GPa et un module tangent maximum égal à 98 GPa, mesurés sur une courbe contrainte de traction en fonction de l'allongement déterminée avec une précontrainte de 20 MPa ramenée à la section de métal de l'élément de renforcement, la contrainte de traction correspondant à une tension mesurée ramenée à la section de métal de l'élément de renforcement. Sur une courbe contrainte de traction en fonction de l'allongement déterminée avec une précontrainte de 10 MPa ramenée à la section globale de l'élément de renforcement, la contrainte de traction correspondant à une tension mesurée ramenée à la section globale de l'élément de renforcement, ce câble de formule 21x23 présente un module sécant à 0,7% égal à 23 GPa et un module tangent maximum égal à 49 GPa.

De la même façon, un autre exemple d'éléments de renforcement est un assemblage de formule 21x28, dont la construction est 3x(0.32+6x0.28) 6.2/9.3 SS. Ce câble présente un module sécant à 0,7% égal à 56 GPa et un module tangent maximum égal à 102 GPa, mesurés sur une courbe contrainte de traction en fonction de l'allongement déterminée avec une précontrainte de 20 MPa ramenée à la section de métal de l'élément de renforcement, la contrainte de traction correspondant à une tension mesurée ramenée à la section de métal de l'élément de renforcement. Sur une courbe contrainte de traction en fonction de l'allongement déterminée avec une précontrainte de 10 MPa ramenée à la section globale de l'élément de renforcement, la contrainte de traction correspondant à une tension mesurée ramenée à la section globale de l'élément de renforcement, ce câble de formule 21x28 présente un module sécant à 0,7% égal à 27 GPa et un module tangent maximum égal à 49 GPa.

Les essais réalisés ont montré que le pneumatique ainsi réalisé selon l'invention permet de conserver des propriétés d'endurance satisfaisantes associées à une résistance à l'usure notamment au niveau des bords de la bande de roulement nettement améliorée par rapport au pneumatique tel que décrit précédemment. Les inventeurs ont su mettre en évidence que les éléments de renforcement de la couche additionnelle selon l'invention autorise la fabrication du pneumatique, notamment sa mise en forme, et permettent d'obtenir une rigidité satisfaisante au niveau des bords de la bande de roulement qui autorise une résistance à l'usure satisfaisante. En effet, afin de pouvoir fabriquer le pneumatique considéré de la manière la plus simple possible et à un coût le plus faible possible, l'armature, conforme à l'invention, doit présenter pour les faibles forces de traction imprimée parallèlement à la direction des éléments de renforcement un certain allongement relatif, nécessaire à la possibilité d'avoir un développement circonférentiel de l'armature de sommet plus important lors des opérations de confection, finition et vulcanisation du pneumatique.

Par ailleurs, la position radialement intérieure de la couche additionnelle par rapport aux couches de sommet de travail conduit à des performances d'endurances satisfaisantes notamment en ce qui concerne les couches de sommet de travail et l'armature de carcasse.

Selon un mode préféré de réalisation de l'invention, l'armature de sommet est composée d'au moins deux couches additionnelles formées d'éléments de renforcement métalliques orientés circonférentiellement. Une telle réalisation permet d'obtenir une rigidité au niveau des épaules du pneumatique satisfaisante avec des diamètres d'éléments de renforcement usuels.

De préférence encore, toutes les couches additionnelles formées d'éléments de renforcement métalliques orientés circonférentiellement sont radialement intérieures aux couches de sommet de travail.

Une telle réalisation permet d'améliorer encore les propriétés d'endurance des couches de sommet de travail et l'armature de carcasse.

Une variante avantageuse de l'invention prévoit que l'armature de sommet comporte en outre une couche de triangulation formée d'éléments de renforcement métalliques faisant avec la direction circonférentielle des angles supérieurs à 60°.

De préférence, selon cette variante de réalisation de l'invention, la couche de triangulation est radialement intérieure aux autres couches de l'armature de sommet.

La présence d'une nappe de triangulation est notamment favorable à l'endurance de l'armature de carcasse, en prévenant les risques de mise en compression de celle-ci.

Avantageusement encore, l'armature de sommet comporte en outre une couche de protection radialement extérieure aux autres couches de l'armature de sommet. Une telle couche de protection confère notamment une protection de l'armature de sommet contre les risques de perforation de la bande de roulement. Les éléments de renforcements de la couche de protection sont avantageusement élastiques. Les angles de ces éléments de renforcements sont de préférence identiques à ceux de la couche de travail radialement adjacente pour prévenir en outre les risques d'oxydation de ladite couche de travail radialement adjacente.

La nappe de protection peut avoir une largeur axiale inférieure à la largeur axiale de la nappe de travail la moins large, mais avantageusement suffisante pour recouvrir totalement la zone de couplage entre les deux nappes de sommet de travail, et d'autant plus avantageusement que la bande de roulement du pneumatique considéré comprend une rainure circonférentielle ou quasi-circonférentielle axialement disposée radialement sur la zone de couplage entre les deux nappes de travail. Ladite nappe de protection peut aussi avoir une largeur axiale supérieure à la largeur axiale de la nappe de travail la moins large, telle qu'elle recouvre les bords de la nappe de travail la moins large et, dans le cas de la nappe radialement supérieure comme étant le moins large, telle qu'elle soit couplée, dans le prolongement axial de l'armature additionnelle, avec la nappe de sommet de travail la plus large.

Selon un autre mode de réalisation de l'invention, la nappe de protection peut avoir une largeur axiale supérieure à la largeur axiale de la couche additionnelle axialement la plus large, formée d'éléments de renforcement métalliques orientés circonférentiellement. Selon ce mode de réalisation de l'invention, lors d'une opération de rechapage, la couche d'éléments de renforcement susceptible d'être mise à nu est sur toute la largeur axiale de l'armature de sommet une couche d'éléments de renforcement dans laquelle, lesdits éléments de renforcement forment avantageusement un angle avec la direction circonférentielle, ou plus exactement n'étant pas des éléments de renforcement circonférentiels.

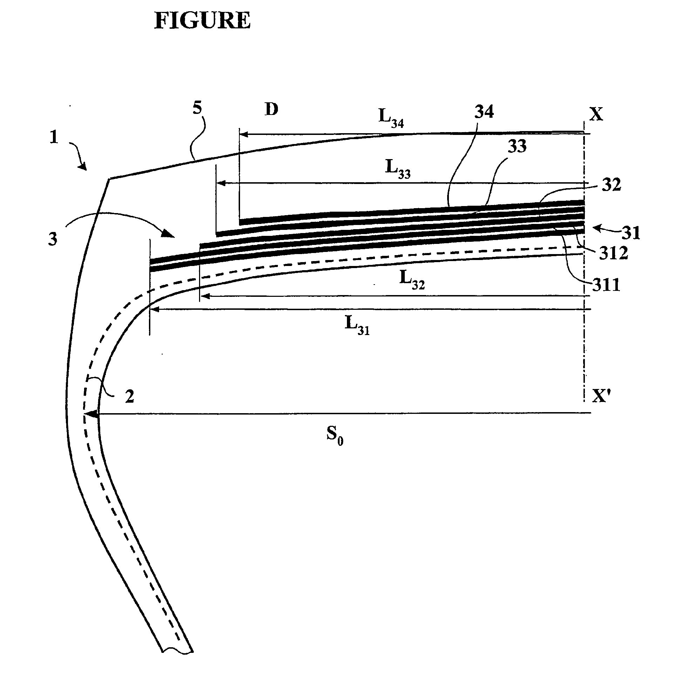

D'autres détails et caractéristiques avantageux de l'invention ressortiront ci-après de la description d'un exemple de réalisation en référence à la figure qui représente une vue en section méridienne d'un schéma d'une armature de sommet conforme à l'invention.

La figure n'est pas représentée à l'échelle pour en simplifier la compréhension.

Le pneumatique 1, de dimension 495/45 R22.5, comprend une armature de carcasse radiale, formée d'une seule nappe 2 de câbles métalliques inextensibles, ancrée dans chaque bourrelet (les bourrelets ne sont pas représentés sur la figure). Ladite armature de carcasse 2 est radialement surmontée d'une armature de sommet 3, elle-même surmontée d'une bande de roulement 5. L'armature de sommet 3 est composée radialement de l'intérieur à l'extérieur :
- d'une armature additionnelle 31, constituée de deux couches identiques 311, 312, formée de câbles métalliques en acier 21x28, de type "bi-module" et circonférentiels (sont dits circonférentiels des câbles faisant avec la direction circonférentielle un angle compris dans l'intervalle 0° ± 2,5°).
- l'armature additionnelle 31 étant recouverte d'une première nappe de sommet de travail 32 formée de câbles métalliques 27x23 frettés, en acier et inextensibles (sont dits inextensibles des câbles présentant sous une force égale à 10% de leur force de rupture un allongement relatif au plus égal à 2%), les dits câbles ayant un diamètre de 1,3 mm, parallèles entre eux dans la nappe et disposés avec un pas de 2,5 mm (mesuré perpendiculairement aux dits câbles). Lesdits câbles sont orientés par rapport à la direction circonférentielle avec un angle α, compris entre 10° et 45° et dans le cas décrit égal à 18°;
- la première nappe de sommet de travail 32 étant recouverte de la deuxième nappe de sommet de travail 33 formée de câbles métalliques 27x23 frettés identiques à ceux de la première nappe 32, disposés avec le même pas et faisant avec la direction circonférentielle un angle β, opposé à l'angle α des câbles de la première nappe, et dans le cas décrit égal audit angle α (mais pouvant être différent dudit angle α) ;
- l'armature de sommet 3 étant complétée par une nappe 34 de câbles métalliques en acier dits élastiques, orientés par rapport à la direction circonférentielle d'un angle χ de même sens que l'angle β et égal audit angle β (mais pouvant être différent), ladite nappe 34 étant une nappe dite de protection, et des câbles élastiques étant des câbles ayant à la rupture un allongement relatif supérieur à 4%.

La largeur axiale L₃₂ de la première nappe de travail (32) est égale à 300 mm. La largeur axiale L₃₃ de la deuxième nappe de travail (33) est égale à 280 mm. Quant à la largeur axiale globale L₃₁ de la nappe additionnelle (31), elle est égale à 400 mm. La dernière nappe de sommet (34), dite de protection, a une largeur L₃₄ sensiblement égale à 270 mm.

## Revendications

1. - Pneumatique (1) comprenant une armature de carcasse radiale (2) surmontée radialement d'une armature de sommet (3) composée d'au moins deux couches de sommet de travail (32-34) formées d'éléments de renforcement métalliques, croisés d'une couche à la suivante en faisant avec la direction circonférentielle des angles compris entre 10 et 45°, et d'au moins une couche additionnelle (311,312) formée d'éléments de renforcement métalliques orientés circonférentiellement, **caractérisé en ce qu'**au moins une couche additionnelle (311, 312) est radialement intérieure aux couches de sommet de travail (32-34), **en ce que** ladite couche additionnelle (311, 312) présente une largeur axiale plus grande que la largeur de la couche de sommet de travail (32) la plus large axialement et **en ce que** les éléments de renforcement de ladite couche additionnelle sont des éléments de renforcement métalliques présentant un module sécant à 0,7 % d'allongement compris entre 10 et 120 GPa et un module tangent maximum inférieur à 150 GPa.

2. - Pneumatique selon la revendication 1, **caractérisé en ce que** le module sécant des éléments de renforcement à 0,7 % d'allongement est inférieur à 100 Gpa, de préférence supérieur à 20 GPa et de préférence compris entre 30 et 90 GPa.

3. - Pneumatique selon l'une des revendications 1 ou 2, **caractérisé en ce que** le module tangent maximum des éléments de renforcement est inférieur à 130 GPa et de préférence inférieur à 120 GPa.

4. - Pneumatique selon l'une des revendications 1 à 3, **caractérisé en ce que** les éléments de renforcement de ladite couche additionnelle (311, 312) sont des éléments de renforcement métalliques présentant une courbe contrainte de traction en fonction de l'allongement relatif ayant des faibles pentes pour les faibles allongements et une pente sensiblement constante et forte pour les allongements supérieurs.

5. - Pneumatique selon l'une des revendications précédentes, **caractérisé en ce que** l'armature de sommet (3) est composée d'au moins deux couches additionnelles (311,312) formées d'éléments de renforcement métalliques orientés circonférentiellement.

6. - Pneumatique selon l'une des revendications précédentes, **caractérisé en ce que** toutes les couches additionnelles formées d'éléments de renforcement métalliques orientés circonférentiellement sont radialement intérieures aux couches de sommet de travail.

7. - Pneumatique selon l'une des revendications précédentes, **caractérisé en ce que** l'armature de sommet comporte en outre une couche de triangulation formée d'éléments de renforcement métalliques faisant avec la direction circonférentielle des angles supérieurs à 60°.

8. - Pneumatique selon la revendication 7, **caractérisé en ce que** la couche de triangulation est radialement intérieure aux autres couches de l'armature de sommet.

9. - Pneumatique selon l'une des revendications précédentes, **caractérisé en ce que** l'armature de sommet comporte en outre une couche de protection et **en ce qu'**elle est radialement extérieure aux autres couches de l'armature de sommet.

10. - Pneumatique selon l'une des revendications précédentes, **caractérisé en ce que** les éléments de renforcement de ladite couche additionnelle sont des assemblages métalliques de type 21x23 ou 21x28.

## Claims

1. - A tyre (1) comprising a radial carcass reinforcement (2) radially surmounted by a crown reinforcement (3) formed of at least two working crown layers (32-34) formed of metallic reinforcement elements, crossed from one layer to the next, forming angles of between 10 and 45° with the circumferential direction, and of at least one additional layer (311, 312) formed of circumferentially oriented metallic reinforcement elements, **characterised in that** at least one additional layer (311, 312) is radially internal to the working crown layers (32-34), **in that** said additional layer (311, 312) has an axial width greater than the width of the axially widest working crown layer (32) and **in that** the reinforcement elements of said additional layer are metallic reinforcement elements having a secant modulus at 0.7% elongation of between 10 and 120 GPa and a maximum tangent modulus of less than 150 GPa.

2. - A tyre according to Claim 1, **characterised in that** the secant modulus of the reinforcement elements at 0.7% elongation is less than 100 GPa, preferably greater than 20 GPa and preferably still of between 30 and 90 GPa.

3. - A tyre according to one of Claims 1 or 2, **characterised in that** the maximum tangent modulus of the reinforcement elements is less than 130 GPa and preferably less than 120 GPa.

4. - A tyre according to one of Claims 1 to 3, **characterised in that** the reinforcement elements of said additional layer (311, 312) are metallic reinforcement elements having a curve of tensile stress as a function of the relative elongation having shallow gradients for the low elongations and a substantially constant, steep gradient for the higher elongations.

5. - A tyre according to one of the preceding claims, **characterised in that** the crown reinforcement (3) is composed of at least two additional layers (311, 312) formed of circumferentially oriented metallic reinforcement elements.

6. - A tyre according to one of the preceding claims, **characterised in that** all the additional layers formed of circumferentially oriented metallic reinforcement elements are radially internal to the working crown layers.

7. - A tyre according to one of the preceding claims, **characterised in that** the crown reinforcement furthermore comprises a triangulation layer formed of metallic reinforcement elements forming angles greater than 60° with the circumferential direction.

8. - A tyre according to Claim 7, **characterised in that** the triangulation layer is radially internal to the other layers of the crown reinforcement.

9. - A tyre according to one of the preceding claims, **characterised in that** the crown reinforcement furthermore comprises a protective layer and **in that** it is radially external to the other layers of the crown reinforcement.

10. - A tyre according to one of the preceding claims, **characterised in that** the reinforcement elements of said additional layer are metallic assemblies of type 21x23 or 21x28.

## Patentansprüche

1. Luftreifen (1) mit einer radialen Karkassenarmierung (2), über der radial eine Laufflächenkronenarmierung (3) liegt, die aus mindestens zwei Arbeitslaufflächenkronenschichten (32-34) besteht, die aus metallischen Verstärkungselementen gebildet sind, die von einer Schicht zur nächsten gekreuzt sind und dabei zu der Umfangsrichtung Winkel zwischen 10 und 45° bilden, und aus mindestens einer zusätzlichen Schicht (311, 312), die aus metallischen Verstärkungselementen besteht, die umfänglich ausgerichtet sind, **dadurch gekennzeichnet, dass** mindestens eine zusätzliche Schicht (311, 312) radial innerhalb der Arbeitslaufflächenkronenschichten (32-34) liegt, und dass die zusätzliche Schicht (311, 312) eine axiale Breite aufweist, die breiter ist als die Breite der axial breitesten Arbeitslaufflächenkronenschicht (32), und dass die Verstärkungselemente der zusätzlichen Schicht metallische Verstärkungselemente sind, die ein Sekantenmodul zu 0,7 % Dehnung zwischen 10 und 120 GPa und ein maximales Tangentenmodul kleiner als 150 GPa aufweisen.

2. Luftreifen nach Anspruch 1, **dadurch gekennzeichnet, dass** das Sekantenmodul der Verstärkungselemente zu 0,7 % Dehnung kleiner als 100 GPa ist, vorzugsweise größer als 20 GPa und vorzugsweise zwischen 30 und 90 GPa liegt.

3. Luftreifen nach einem der Ansprüche 1 oder 2, **dadurch gekennzeichnet, dass** das maximale Tangentenmodul der Verstärkungselemente kleiner als 130 GPa ist und vorzugsweise kleiner als 120 GPa.

4. Luftreifen nach einem der Ansprüche 1 bis 3, **dadurch gekennzeichnet, dass** die Verstärkungselemente der zusätzlichen Schicht (311, 312) metallische Verstärkungselemente sind, die eine Zugspannungskurve in Abhängigkeit von der relativen Dehnung aufweisen, die schwache Steigungen für die schwachen Dehnungen und eine im Wesentlichen konstante und starke Steigung für die größeren Dehnungen hat.

5. Luftreifen nach einem der vorhergehenden Ansprüche, **dadurch gekennzeichnet, dass** die Laufflächenkronenarmierung (3) aus mindestens zwei zusätzlichen Schichten (311, 312) besteht, die aus metallischen Verstärkungselementen bestehen, die umfänglich ausgerichtet sind.

6. Luftreifen nach einem der vorhergehenden Ansprüche, **dadurch gekennzeichnet, dass** alle zusätzlichen Schichten, die aus metallischen Verstärkungselementen, die umfänglich ausgerichtet sind, gebildet sind, radial innerhalb der Arbeitslaufflächenkronenschichten liegen.

7. Luftreifen nach einem der vorhergehenden Ansprüche, **dadurch gekennzeichnet, dass** die Laufflächenkronenarmierung ferner eine Triangulationsschicht aufweist, die aus metallischen Verstärkungselementen gebildet ist, die mit der Umfangsrichtung Winkel größer als 60° bilden.

8. Luftreifen nach Anspruch 7, **dadurch gekennzeichnet, dass** die Triangulationsschicht radial innerhalb der anderen Schichten der Laufflächenkronenarmierung liegt.

9. Luftreifen nach einem der vorhergehenden Ansprüche, **dadurch gekennzeichnet, dass** die Laufflächenkronenarmierung ferner eine Schutzschicht aufweist, und dass sie radial außerhalb der anderen Schichten der Laufflächenkronenarmierung liegt.

10. Luftreifen nach einem der vorhergehenden Ansprüche, **dadurch gekennzeichnet, dass** die Verstärkungselemente der zusätzlichen Schicht metallische Aufbauten des Typs 21x23 oder 21x28 sind.
